Europäisches Patentamt

**European Patent Office**

Office européen des brevets

(19)

(11) Publication number: **0 255 763 B1**

# EUROPEAN PATENT SPECIFICATION

(12)

(45) Date of publication of patent specification: **11.09.91**

(51) Int. Cl.⁵: **H01B 13/24, G02B 6/44**

(21) Application number: **87306026.3**

(22) Date of filing: **08.07.87**

(54) **Manufacture of cables.**

(30) Priority: **31.07.86 GB 8618662**

(43) Date of publication of application:
**10.02.88 Bulletin 88/06**

(45) Publication of the grant of the patent:
**11.09.91 Bulletin 91/37**

(84) Designated Contracting States:
**AT BE CH DE ES FR IT LI LU NL SE**

(56) References cited:
**DE-A- 2 723 659**
**GB-A- 1 573 331**
**GB-A- 2 081 323**
**US-A- 3 800 435**
**US-A- 4 171 609**

(73) Proprietor: **Telephone Cables Limited**
**Chequers Lane**
**Dagenham Essex RM9 6QA(GB)**

(72) Inventor: **Heywood, Clifford**
**16 Garden Way**
**Loughton Essex IG10 2SF(GB)**

(74) Representative: **Kirby, Harold Victor Albert**
**Central Patent Department Wembley Office**
**The General Electric Company, p.l.c. Hirst**
**Research Centre East Lane**
**Wembley Middlesex HA9 7PP(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of manufacturing cables of the kind comprising a plurality of optical fibres, within a protective extruded sheath.

In GB-A-1573331, GB-A-2081323 and US-A-4171609 it has been proposed to manufacture a multi-core power cable by twisting the electrical conductors periodically in opposite directions, and extruding a common thermoplastic sheath around the conductors, the periodic change In the twist direction facilitating the connection of the conductors to branch conductors following removal of an appropriate length of the sheath.

Usually the extruded sheath is led from the extruder head to a cooling apparatus, commonly in the form of a liquid filled trough, although it has also been proposed, for example in US-A-3800435, to direct jets of cooling liquid on to a covering of plastic insulating material extruded around a strand of conducting material. In addition US-A-A171609:, which is closest prior art, discloses the cooling of the sheath on emergence from the extrusion head by means of a water-cooled feedthrough immediately adjacent the extrusion head.

It has also been proposed, for example In DE-A-2723659, for the optical fibre elements of an optical fibre cable to follow a periodically reversing path around the cable axis in order to prevent an undue strain being imposed on the fibres.

An object of the Invention is to provide a particularly advantageous method of manufacturing optical fibre cables of this form.

According, therefore, to the invention, a method of manufacturing an optical fibre cable in which a plurality of optical fibre elements are twisted in a periodically reversing helical fashion about a central axis, a protective sheath of thermoplastic material is extruded around the elements, and a forced rapid cooling of the extruded sheath is caused to take place immediately adjacent the extruder head on emergence of the sheath therefrom, so that the setting of the sheath material maintains the optical fibre elements in their twisted condition, is characterised in that the twisting of the elements is effected by means of an oscillating member positioned within the extruder head.

Preferably the optical elements are twisted in a periodically reversing fashion about a central core, which may be of metal or other materials such as a glass reinforced plastics or a thermoplastics material having a higher or lower softening temperature than the material of the sheath, the core being fed through the extruder head with the optical fibre elements.

In order to obtain or increase an overfeed of the optical fibre elements, the central core may be tensioned during the twisting of the elements and the extrusion and cooling of the sheath. After the sheath has been cooled, the tension is released allowing the central core to contract. This has the effect of reducing the pitch of the twisted elements and increasing the percentage of overfeed.

The term "optical fibre element" includes not only a single optical fibre but also a bundle of fibres surrounded by a protective coating or contained within a tight or loose fitting tube. Where an optical fibre element comprises a bundle of fibres these may be in a stranded or stacked configuration, and in some cases the fibres may be in the form of a ribbon or other desired disposition.

In addition there may be twisted with the optical fibre elements an insulated conductor element, which term includes not only a single insulated conductor but also a group of insulated conductors.

Cooling of the extruded sheath is conveniently effected by directing one or more jets of a cooling fluid, which may be in the form of a gas or alternatively a liquid such as water, on to the extrudate immediately it emerges from the extruder head.

Alternatively, the extruded sheath may be cooled by passing it directly into a cooling trough containing a fluid such as water.

The invention relates not only to the method of manufacturing cables of the kind referred to but also to apparatus for carrying out said method.

According therefore to another aspect of the invention, apparatus for use in manufacturing an optical fibre cable comprising an extruder head, means for feeding a plurality of optical fibre elements into the extruder head, means for twisting the elements in a periodically reversing helical fashion about a central axis, such that on emergence therefrom the twisted elements are surrounded by a protective sheath of thermoplastics material, and cooling means for cooling the extruded sheath disposed immediately adjacent the extruder head so as to effect the cooling of the sheath 11.1 as soon as it emerges from the extruder head, is characterised in that there is located within the extruder head a plate having a plurality of axially directed holes spaced around it, through each of which a corresponding optical fibre element passes on entry into the extruder head, and means for oscillating the plate about its axis for effecting the twisting of the elements.

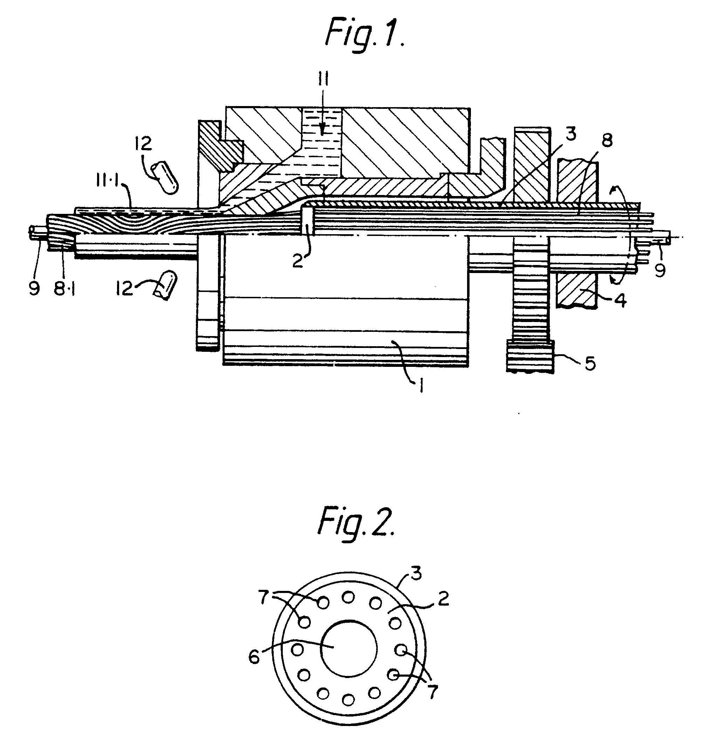

One method of manufacturing an optical fibre cable in accordance with the invention, apparatus for carrying out the method, and a modification of the method, will now be described by way of example with reference to Figures 1 and 2 of the accompanying schematic drawing, in which

Figure 1 represents a part-axial section through the apparatus, and

Figure 2 represents an end view of part of the apparatus.

Thus, the apparatus comprises an extruder head 1 having a central passageway containing a lay plate 2 extending across the inner end of a support tube 3, which is itself supported in bearings 4 and is arranged to be oscillated about its axis by a suitable actuating arrangement shown diagrammatically at 5. The plate 2 has a central circular aperture 6 (Fig. 2) surrounded by a plurality of smaller uniformly spaced apertures 7.

In use the ends of optical fibre elements 8, each of which may comprise one or a plurality of optical fibres tightly or loosely encased in a protective tube, and arranged in a coiled or "Figure 8" formation in individual containers or bobbins (not shown), are arranged to be threaded through respective apertures 7, and the end of a core 9 of extruded thermoplastic material, carried by a drum (also not shown), is arranged to be fed through the central aperture 6. This is preferably accomplished with the lay plate 2 removed from the extruder head 1. After reinsertion of the lay plate 2 within the extruder head 1, the elements 8 and core 9 are fed through the respective apertures 6, 7, while the lay plate 2 is oscillated about its axis in alternatively clockwise and anticlockwise directions, so causing the elements 8 to be twisted in a periodically reversing helical fashion about the core 9. At the same time a thermoplastic material 11 is extruded around the assembly to form an outer sheath as at 11.1, some of the softened thermoplastic material penetrating between the interstices of the tubes. Immediately the extruded sheath material leaves the extruder head it is chilled by jets of cold water directed on to its surface by suitably positioned nozzles as at 12. This produces a rapid setting of the thermoplastic material 11 and the oscillatory lay of the elements 8 as indicated at 8.1 is "captured" by the extrudate and locked in this form.

In some cases a plurality of lay plates are arranged to oscillate in synchronism but by gradually increasing angular amounts in the direction of feed of the fibre elements may be used to provide a greater degree of twist than may readily be achieved utilising a single lay plate only.

In a modification of the method above described the core is formed of suitably strong elastic material and is fed to the extruder head via a first capstan, the cooled assembly, comprising the core, sheath and fibres being fed around a further capstan. The relative speeds of the capstans are arranged to be such that the core is stretched between the capstans, and after passing the second capstan it is permitted to relax so causing the sheath to contract, and reducing the pitch of the fibres, thereby ensuring an increase in the length of the fibres for a given length of cable. By this means the possibility of the fibres being stressed during subsequent manufacture or use of the cable is significantly reduced.

**Claims**

1. A method of manufacturing an optical fibre cable in which a plurality of optical fibre elements (8) are twisted in a periodically reversing helical fashion about a central axis, a protective sheath (11.1) of thermoplastic material is extruded around the elements, and a forced rapid cooling of the extruded sheath is caused to take place immediately adjacent the extruder head on emergence of the sheath therefrom, so that the setting of the sheath material maintains the optical fibre elements (8) in their twisted condition, characterised in that the twisting of the elements (8) is effected by means of an oscillating member (2) positioned within the extruder head (1).

2. A method of manufacturing an optical fibre cable according to Claim 1 wherein the optical fibre elements (8) are twisted in a periodically reversing helical fashion about a central core (9) which is fed through the extruder head (1) with the elements (8).

3. A method of manufacturing an optical fibre cable according to Claim 2 wherein the central core (9) is tensioned during the twisting of the optical fibre elements (8) and the extrusion and cooling of the sheath (11.1).

4. A method of manufacturing an optical fibre cable according to Claim 2 or 3 wherein the central core (9) is formed of a thermoplastics material.

5. A method of manufacturing an optical fibre cable according to Claim 4 wherein the thermoplastics material of the core (9) has a higher softening temperature than the material of the sheath (11.1).

6. A method of manufacturing an optical fibre cable according to any preceding claim wherein at least one insulated electrical conductor element is twisted with the optical fibre elements.

7. A method of manufacturing an optical fibre cable according to any preceding claim wherein the extruded sheath (11.1) is cooled by directing one or more jets of cooling fluid on to its surface as it emerges from the extruder head (1).

8. A method of manufacturing an optical fibre cable according to any preceding claim wherein the extruded sheath (11.1) is cooled by passing it directly into a trough containing a cooling fluid.

9. A method of manufacturing an optical fibre cable according to Claim 7 or 8 wherein the cooling fluid is water.

10. Apparatus for carrying out the method of manufacturing an optical fibre cable according to any preceding claim comprising an extruder head (1), means for feeding a plurality of optical fibre elements into the extruder head, means for twisting the elements in a periodically reversing helical fashion about a central axis, such that on emergence therefrom the twisted elements are surrounded by a protective sheath of thermoplastics material, and cooling means (12) for cooling the extruded sheath disposed immediately adjacent the extruder head (1) so as to effect the cooling of the sheath (11.1) as soon as it emerges from the extruder head, characterised in that there is located within the extruder head a plate (2) having a plurality of axially directed holes (7) spaced around it, through each of which a corresponding optical fibre element (8) passes on entry into the extruder head (1), and means (5) for oscillating the plate about its axis for effecting the twisting of the elements.

**Revendications**

1. Procédé de fabrication d'un câble à fibres optiques dans lequel plusieurs éléments (8) à fibre optique sont retordus en hélice avec inversion de sens autour d'un axe central, une gaine protectrice (11.1) d'une matière thermoplastique est extrudée autour des éléments, et un refroidissement rapide forcé de la gaine extrudée est provoqué très près de la tête de l'extrudeuse à la sortie de la gaine de celle-ci si bien que le durcissement de la matière de la gaine maintient les éléments à fibre optique (8) à leur état retordu, caractérisé en ce que le retordage des éléments (8) est réalisé à l'aide d'un organe oscillant (2) placé dans la tête (1) de l'extrudeuse.

2. Procédé de fabrication d'un câble à fibres optiques selon la revendication 1, dans lequel les éléments (8) à fibre optique sont retordus en hélice avec inversion périodique de sens autour d'une âme centrale (9) qui avance dans la tête (1) de l'extrudeuse avec les éléments (8).

3. Procédé de fabrication d'un câble à fibres optiques selon la revendication 2, dans lequel l'âme centrale (9) est mise sous tension pendant le retordage des éléments à fibre optique (8) et l'extrusion et le refroidissement de la gaine (11.1).

4. Procédé de fabrication d'un câble à fibres optiques selon la revendication 2 ou 3, dans lequel l'âme centrale (9) est formée d'une matière thermoplastique.

5. Procédé de fabrication d'un câble à fibres optiques selon la revendication 4, dans lequel la matière thermoplastique de l'âme (9) a une température de ramollissement supérieure à celle du matériau de la gaine (11.1).

6. Procédé de fabrication d'un câble à fibres optiques selon l'une quelconque des revendications précédentes, dans lequel un élément conducteur électrique isolé au moins est retordu avec les éléments à fibre optique.

7. Procédé de fabrication d'un câble à fibres optiques selon l'une quelconque des revendications précédentes, dans lequel la gaine extrudée (11.1) est refroidie par projection d'un ou plusieurs jets d'un fluide de refroidissement à sa surface lorsqu'elle sort de la tête de l'extrudeuse (1).

8. Procédé de fabrication d'un câble à fibres optiques selon l'une quelconque des revendications précédentes, dans lequel la gaine extrudée (11.1) est refroidie par passage directement dans une rigole contenant un fluide de refroidissement.

9. Procédé de fabrication d'un câble à fibres optiques selon la revendication 7 ou 8, dans lequel le fluide de refroidissement est l'eau.

10. Appareil destiné à la mise en oeuvre du procédé de fabrication d'un câble à fibres optiques selon l'une quelconque des revendications précédentes, comprenant une tête (1) d'extrudeuse, un dispositif destiné à faire avancer plusieurs éléments à fibre optique dans la tête de l'extrudeuse, un dispositif destiné à retordre les éléments en hélice avec inversion périodique de sens autour d'un axe central, de manière que, à la sortie, les éléments retordus soient entourés par une gaine protectrice d'une matière thermoplastique, et un dispositif (12) de refroidissement de la gaine extrudée, placé très près de la tête (1) d'extrudeuse afin qu'il assure le refroidissement de la gaine (11.1) dès qu'elle sort de la tête de l'extrudeuse, caractérisé en ce qu'une plaque (2) est placée dans la tête de l'extrudeuse et a plusieurs trous dirigés axialement (7) et espacés autour de la plaque, un élément correspondant à fibre optique (8) passant dans chacun des trous, à l'entrée dans la tête (1) de l'extrudeuse, et un dispositif (5) est destiné à faire osciller la plaque autour de son axe afin qu'il assure le retordage des éléments.

## Patentansprüche

1. Verfahren zum Herstellen eines Lichtleitfaserkabels, in welchem mehrere Lichtleitelemente (8) in einer sich periodisch umkehrenden schraubenförmigen Art um eine zentrale Achse verwunden werden, eine Schutzhülle (11.1) aus thermoplastischem Material um die Elemente herum extrudiert wird und dafür gesorgt wird, daß eine rapide Zwangskühlung der extrudierten Hülle unmittelbar angrenzend an den Extruderkopf beim Austritt der Hülle aus diesem stattfindet, so daß das Aushärten des Hüllenmaterials die Lichtleitelemente (8) in ihrem verwundenen Zustand erhält,
   **dadurch gekennzeichnet,**
   daß das Verwinden der Elemente (8) mittels eines oszillierenden Teils (2) bewirkt wird, das innerhalb des Extruderkopfes (1) angeordnet ist.

2. Verfahren zum Herstellen eines Lichtleitfaserkabels nach Anspruch 1, in welchen die Lichtleitelemente (8) in einer sich periodisch umkehrenden schraubenförmigen Art um einen zentralen Kern (9) verwunden werden, der mit den Elementen (8) durch den Extruderkopf (1) geführt wird.

3. Verfahren zum Herstellen eines Lichtleitfaserkabels nach Anspruch 2, in welchem der zentrale Kern (9) während des Verwindens der Lichtleitelemente (8) und der Extrusion und Kühlung der Hülle (11.1) unter Spannung gesetzt wird.

4. Verfahren zum Herstellen eines Lichtleitfaserkabels nach Anspruch 2 oder 3, in welchem der zentrale Kern (9) aus einem thermoplastischen Material gebildet wird.

5. Verfahren zum Herstellen eines Lichtleitfaserkabels nach Anspruch 4, in welchem das thermoplastische Material des Kerns (9) eine höhere Erweichungstemperatur als die des Materials der Hülle (11.1) aufweist.

6. Verfahren zum Herstellen eines Lichtleitfaserkabels nach einem vorhergehenden Anspruch, worin zumindest ein isoliertes elektrisches Leiterelement mit den Lichtleitelementen verwunden wird.

7. Verfahren zum Herstellen eines Lichtleitfaserkabels nach einem vorhergehenden Anspruch, in welchem die extrudierte Hülle (11.1) gekühlt wird, indem ein oder mehrere Düsenstrahlen aus kühlendem Fluid auf ihre Oberfläche gerichtet werden, wenn sie aus dem Extruderkopf (1) austritt.

8. Verfahren zum Herstellen eines Lichtleitfaserkabels nach einem vorhergehenden Anspruch, in welchem die extrudierte Hülle (11.1) gekühlt wird, indem sie direkt in eine Kühlfluid enthaltende Wanne geleitet wird.

9. Verfahren zum Herstellen eines Lichtleitfaserkabels nach Anspruch 7 oder 8, in welchem das Kühlfluid Wasser ist.

10. Vorrichtung zum Durchführen des Verfahrens zum Herstellen eines Lichtleitfaserkabels nach einem vorhergehenden Anspruch, aufweisend einen Extruderkopf (1), eine Einrichtung zum Zuführen mehrerer Lichtleitelemente in den Extruderkopf, eine Einrichtung zum Verwinden der Elemente in einer sich periodisch umkehrenden schraubenförmigen Art um eine zentrale Achse, derart, daß beim Austritt aus dem Kopf die verwundenen Elemente von einer Schutzhülle aus thermoplastischem Material umgeben werden, und eine Kühleinrichtung (12) zum Kühlen der extrudierten Hülle, welche Einrichtung unmittelbar angrenzend an den Extruderkopf (1) angeordnet ist, um so die Kühlung der Hülle (11.1) zu bewirken, sobald diese aus dem Extruderkopf austritt,
    **dadurch gekennzeichnet,**
    daß innerhalb des Extruderkopfes eine Platte (2) angeordnet ist, die mehrere axial gerichteter Löcher (7) aufweist, die auf ihr rundherum verteilt sind und durch jedes von denen ein entsprechendes Lichtleitelement (8) beim Eintritt in den Extruderkopf (1) tritt, und eine Einrichtung (5) zum Oszillieren der Platte um deren Achse zum Bewirken der Verwindung der Elemente angeordnet ist.

# Fig.1.

# Fig.2.